(19)

**Europäisches Patentamt**
**European Patent Office**
**Office européen des brevets**

(11)     **EP 4 510 091 B1**

(12)     **EUROPEAN PATENT SPECIFICATION**

(45) Date of publication and mention
of the grant of the patent:
**21.01.2026  Bulletin 2026/04**

(21) Application number: **23192346.7**

(22) Date of filing: **21.08.2023**

(51) International Patent Classification (IPC):
*G06V 40/16* (2022.01)      *G07D 7/00* (2016.01)

(52) Cooperative Patent Classification (CPC):
**G06V 40/178; G06V 40/179; G07D 7/00**

(54) **COMPUTER-IMPLEMENTED METHOD OF VERIFYING A PERSON'S AGE**

COMPUTERIMPLEMENTIERTES VERFAHREN ZUR ÜBERPRÜFUNG DES ALTERS EINER
PERSON

PROCÉDÉ MIS EN UVRE PAR ORDINATEUR DE VÉRIFICATION DE L'ÂGE D'UNE PERSONNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.08.2023  GB 202312656**

(43) Date of publication of application:
**19.02.2025  Bulletin 2025/08**

(73) Proprietor: **Innovative Technology Limited
Oldham,
Lancashire OL1 4EQ (GB)**

(72) Inventors:
• **STRONG, Matthew
Oldham, OL1 4EQ (GB)**

• **AKRAM, Zakee
Oldham, OL1 4EQ (GB)**
• **O'BRIEN, Andrew
Oldham, OL1 4EQ (GB)**
• **DUNLOP, Peter
Oldham, OL1 4EQ (GB)**

(74) Representative: **Mewburn Ellis LLP
Aurora Building
Counterslip
Bristol BS1 6BX (GB)**

(56) References cited:
**EP-A1- 3 869 395      CN-B- 104 680 131
JP-A- 2020 021 291    JP-A- 2020 021 459
JP-A- 2020 022 044    US-A1- 2021 264 583**

## Description

### *Field of the Invention*

The present invention relates to a computer-implemented method of verifying a person's age and to an age verification system.

### *Background*

Age verification (for example of a customer) is traditionally performed by humans who first estimate the age of the customer by looking at the customer and using their experience to estimate their age. If the person estimating the age is unsure, they may verify the person's age by inspecting their ID (identification document).

However, it is known that the accuracy of age estimation performed by humans can be inaccurate because it is subject to unconscious biases and can also be affected by other factors such as fatigue or intimidation.

Additionally, humans checking ID cards are prone to errors. For example, a human may not be able to identify fake IDs, or they may miscalculate the age of the person from a date of birth (DOB) displayed on the ID card.

Moreover additional information to person's DOB may be included on the identity card such as the person's full name and home address which can raise privacy concerns. Additionally, if the person checking the ID is unfamiliar with that particular ID card it may be time consuming to locate the information that the person needs to find (e.g., the DOB) to verify the person's age. This may be especially difficult / time consuming if the ID card contains a language which is the person checking the ID does not speak.

Known automatic ID readers typically comprise bespoke hardware for receiving an ID which are configured to read the ID. Generally, this bespoke hardware is configured to obtain an image of the ID, which can then be processed in a separate application.

Alternative approaches for verifying a person's age, include using a person's own mobile phone to capture an image of the ID. This image may be sent to a remote processing location to perform the necessary processing. However, this method depends on the person having access to, or owning a mobile phone, downloading the necessary application to the mobile phone, and sending the data over a network connection to the remote processing location.

CN 104680131 B proposes a method for comprehensively utilizing identity information associated with an identity document and a high-definition face image. EP 3869395 A1 proposes using infra-red (IR) imaging to detect liveness of an individual that is presenting identification for authentication.

The present invention has been devised in light of the above considerations.

### *Summary of the Invention*

Broadly, the present invention provides a computer-implemented method of verifying a person's age using a camera. This is done by using image analysis to detect a person, process a photo identification document (ID), and verify that the photo ID belongs to the person whose age is being verified. This enables more accurate verification of a person's age to be performed locally without storing any private data.

Accordingly, in a first aspect of the present invention there is provided: a computer-implemented method of verifying a person's age according to claim 1.

Advantageously, the computer-implemented method of the first aspect provides a quicker and more accurate age verification process which is not susceptible to human error or biases. Moreover, by using a face recognition module to determine whether or not the person detected in the first image is the same person as the person on the photo ID, the likelihood of someone fraudulently using another person's ID to verify their age is reduced.

Additionally, the age verification process of the first aspect may be implemented using less hardware than existing systems which typically require separate ID readers for analysing an ID. Moreover, the computer-implemented method of the first aspect may be easily adapted to recognise additional types of IDs from images without requiring hardware to be adjusted or changed.

As discussed below, with respect to the third aspect, the computer-implemented method of the first aspect may form part or all of an age verification routine being performed by an age verification system.

The age verification message may include the stated age of the person on the ID. In some examples, (as described herein) the age verification message may include an indication that the stated age of the person is higher than a restriction age threshold.

The method may comprise verifying the stated age of the person as a verified age of the person if the person detected in the first image is determined to be the person on the ID. Therefore, the age verification message may include the verified age of the person.

The computer-implemented method may further comprise: enabling or rejecting a transaction based on the age verification message. For example, the transaction may be enabled if the person detected in the first image is determined to be the person on the photo ID and the stated age is higher than a verified threshold age. However, if the person is determined to be different to the person on the photo ID and/or the stated age on the photo ID is lower than the verified threshold age, then the transaction may be rejected.

The computer-implemented method may further comprise estimating the age of the person in the first image. Estimating the age of the person in the first image may comprise using an age estimation neural network (described in detail below) to determine an estimated age of the person from the face detected in the first image. The age verification message may include the estimated age of the person. In some examples, the age verification message may include an indication that the estimated age of the person is higher than a challenge threshold age.

The computer-implemented method may further comprise comparing the estimated age to a challenge threshold age. For example, the challenge threshold age may be a restriction age for buying restricted goods or services. In other examples, the challenge threshold age may be a threshold age which is higher than the restriction age (e.g., the challenge threshold age may be 25 years old, and the restriction age may be 18 years old or 21 years old).

Therefore, if the estimated age is lower than the challenge threshold age, the method may comprise requesting the second image of the ID. The second image of the ID may be requested from the person. For example, a message may be displayed on a screen, or an audio cue may be played instructing the person to present their ID.

If the estimated challenge age is higher than the challenge threshold, then the second image of the photo ID may not be requested. Therefore, in this example, the steps of receiving the second image of an ID, determining regions of interest in the second image, extracting the date of birth from the first region and comparing the face of the person detected in the first image to the face in the photograph of the second image may be omitted.

The computer-implemented method may comprise enabling a transaction based on the estimated age, wherein the transaction is enabled if the estimated age is above the challenge threshold age. For example, the transaction may comprise the purchase of age-restricted goods or services. Therefore, if a person in the first image visibly older than a restriction age for purchasing the goods or services then the transaction may be allowed without requiring the person to present their ID, thereby increasing the speed and efficiency of the age verification system.

The first and second images may be received from a camera. The camera may be any suitable image capture device configured to film or video a field of view of the camera. For example, the camera may be configured to continuously film a field of view whereby multiple images are captured at a predetermined frame rate. In other examples, the camera may be configured to capture stills. For example, the camera may be configured to capture an image of the field of view upon receipt of a command from a computing device.

When the camera is configured to continuously obtain images of the field of view, the computer-implemented method may comprise receiving a plurality of images from the camera and determining that one of the plurality of images comprises a face in the field of view of the camera. In other words, the computer-implemented method may comprise continuously assessing the plurality of images until the first image comprising a face is received.

Determining if one of the plurality of images comprises a face may comprise using a face recognition module to search each of the plurality of images for a face. The face recognition module may comprise a first neural network configured to receive the first image and detect a face of the person in the first image.

The first neural network may comprise a convolutional neural network (CNN) which is configured to receive an image of a scene (i.e., one of the plurality of images), detect a face in the scene, and output a cropped image of the detected face. For example, the CNN may be trained for real time object detection using transfer learning to detect, and optionally track, human faces.

The first image may be one of a first set of images of the person. The first set of images may comprise a plurality of images (i.e., frames) captured at a predetermined frame rate by the camera. The computer-implemented method may comprise detecting the face of the person in each image of the first set of images.

In some examples, the face recognition module may be configured to identify a face in a predetermined number of the images. If the face is not detected in at least the predetermined number of images, then the person in the first image may be ignored. For example, the face recognition module may be configured to identify a face in at least two images, more preferably a larger number of images. If a person is present in the field of view but their face is not validly detected in enough images of the field of view, then the person may not validly detect and can be ignored. In this way, the chances of a detection being falsely triggered, for example by a person passing through the field of view, are reduced.

The computer-implemented method may comprise tracking the face of the person between successive images. For example, the face of the person may be detected and then tracked between each of a first set of images received from the camera. In this way, multiple views of the person's face may be captured as the person moves in the field of view. By tracking the face, the accuracy of the age verification process may be improved since more features of the person's face may be analysed.

In some examples, the computer-implemented method may comprise assessing the quality of the first image comprising a face. In this example, if the quality of the first image is too low, then the first image may be rejected. If the first image is rejected, or a first set of first images is rejected then the computer-implemented method may be restarted (and repeated) until a first image (or a first set of images) comprising a face which is of an adequate quality is received.

For example, a face detected in an image may be determined to be low quality if the face is not in focus, and / or if the face is not of a sufficient size in the image (e.g., the person is too far away), and/or if the orientation (i.e., pose) of the face is too extreme, and/or if only a partial face is detected in the image. For example, if a face is detected in the first image (or in one or a first set of images) which is obscured or which crosses a border of the image, then the face may not be validly detected. The detection of a face in the first image, and optionally determining that the person in the first image is under a threshold age as discussed in detail below, may trigger the age verification system to request the second image of the ID. For example, a message may be displayed on a screen instructing the person to present their ID. The message may include a request for the person to give their consent for their picture to be taken and temporarily stored, for example, in line with GDPR legislation.

In this example, the computer-implemented method may comprise receiving a consent indication from a user interface, and upon receiving the consent indication, searching subsequent images received from the camera for an image of a photo ID. If a consent indication is not received, then the images from the camera may not be searched for an ID and the computer implemented method may be restarted.

Receiving the second image of an identification document may comprise receiving one or more images from the camera (after receiving the first image) and detecting the photo ID in one of the images. Detecting the photo ID in one of the images may be performed by an ID processing module. The ID processing module may comprise an ID processing neural network configured to recognise photo IDs. In some examples, the same neural network configured to recognise photo IDs may also be configured to determine the regions of interest in the second image as described below.

The computer-implemented method may comprise checking the quality of the second image. For example, if the photo ID (and in particular the text and/or the photograph on the photo ID) is not in focus then the second image may not be validly received until a photo ID is detected which is in focus. In some examples, checking the quality of the second ID may include checking that the photograph and/or text on the ID are visible in their entirety. For example, if the text on the ID and/or the photograph are damaged or obscured then the ID may not be validly detected in the second image.

The regions of interest in the second image may be determined using an ID segmentation module configured to identify regions of the second image containing predetermined visible features.

For example, the regions of interest in the second image may be determined using an ID processing neural network configured to identify predetermined regions of interest containing specific features. Therefore, determining the regions of interest may also be referred to as performing image segmentation on the second image to locate predetermined visible features.

The image segmentation may involve partitioning the (digital) image into multiple image segments (also known as image regions or image objects). Each region of interest may be a collection or region of pixels that are represented by a mask, or a bounding box. By dividing the second image into segments, only the important segments of the second image may be processed in subsequent steps thereby increasing the accuracy and reducing the processing load of the age verification process.

The ID processing neural network may be configured to classify the ID as belonging to one of a plurality of predetermined ID types. For example, the ID processing neural network may be configured to identify predetermined visible features which are present in each category of ID.

The ID processing neural network may be a CNN configured to receive an image of a scene (i.e., the second image) and identify IDs in the scene. For example, the CNN may have been trained using transfer learning to detect categories of photo ID.

The ID processing neural network may be configured to receive the second image as an input, and to output the coordinates of bounding boxes. The bounding boxes may include at least a bounding box which contains the identified photo ID. The bounding boxes may also include a bounding box containing the photograph of a face on the photo ID and/or a region of the ID containing date of birth information on the ID.

The ID processing neural network may be trained by providing images of a plurality of different types of photo IDs (e.g., drivers licenses, passports, ID card) to the neural network. The plurality of different types of photo IDs may comprise photo IDs from a plurality of jurisdictions or countries. Accordingly, the age verification process can be more flexible and may be used more widely by users with different forms of ID, without requiring bespoke scanning hardware to be provided which can receive and scan IDs of different shapes and sizes.

The ID processing module may be configured to determine if the ID in the second image is valid. The ID processing module may be configured to ignore IDs which it does not recognise, or which are invalid. Specifically, the ID processing module may be configured to ignore IDs in which predetermined features are not detected. For example, the predetermined features may include the relative locations, size and/or shape of visible features on an ID such as a number representing a DOB, a name, or a photograph. Therefore, the likelihood of fraudulent IDs being accepted may be reduced compared to existing age verification systems because errors in the appearance of the fraudulent IDs which result in unexpected or incorrect features (e.g., an incorrect font or positioning of an expected feature on the ID) may be detected by the neural network and the ID ignored.

In some examples, the computer-implemented method may comprise starting a timer for receiving the second image of the photo ID. If an image comprising a photo ID is detected within a predetermined time limit for the timer, then the ID processing module may be used to determine the regions of interest and extract DOB information from the ID. However, if an image comprising the photo ID is not received within the predetermined time limit for the timer, then the age verification process may be restarted, and a photo ID may not be validly detected until a new first image of the person is received.

The timer for receiving the second image of a photo ID may be started upon requesting the person to present a photo ID. In other examples, the time may be started when a consent notification is received indicating that the person consents to their picture being temporarily stored and their data being analysed.

The predetermined time limit for receiving the second image of the photo ID may be between 2 seconds and 20 seconds, more preferably between 3 and 15 seconds, more preferably 5 seconds.

Comparing the face of the person detected in the first image to the face on the photo ID in the second image may comprise: extracting a first set of facial landmarks from the face in the first image; extracting a second set of facial landmarks from the face in the second image; and comparing the first and second sets of facial landmarks. The first and second sets of facial landmarks may comprise features of the face, such as the shape of the eyes, nose, and mouth, as well as the relative distances between these features.

The computer-implemented method comprises receiving a third image of the person and detecting the face of the person in the third image. Therefore, the first set of facial landmarks may be extracted from the face in the third image. In other words, comparing the face of the person detected in the first image to the face on the photo ID in the second image may comprise: extracting a first set of facial landmarks from the third image; extracting a second set of facial landmarks from the face in the second image; and comparing the first and second sets of facial landmarks.

The computer-implemented method may include requesting consent from the user to temporarily stored their image and then capturing the third image of the person, the third image containing the person's face. The request for consent may be included in the message instructing the user to present their ID.

The computer-implemented method may include receiving an indication from a user interface indicating that the user has provided consent to temporarily store their image. The third image containing the person's face may be captured and stored upon receipt of the indication from the user interface. In some examples, the camera may be triggered to capture the third image of the scene containing the person's face upon receipt of the consent indication or upon detection of the photo ID in the second image.

The computer-implemented method may comprise tracking the face of the person detected in the first image in subsequent images to determine that the face detected in the third image belongs to the person that was detected in the first image. In some examples, the face detected in the first image may be compared to the face detected in the third image, using the same techniques described herein in relation to the face comparison module, to ensure that the person in the first image is the same as the person in the third image.

Accordingly, references to "the face of the person detected in the first image" may be referring to a face as captured in the first image, or to a face belonging to the person from the first image as captured in a different, subsequent image (i.e., the third image).

It should be noted that in some examples, the second image of the photo ID and the third image of the person may be a same image or different regions of a same image. For example, if the person's face is visible in the field of view of the camera alongside the photo ID, then the same image may be used as both the second and third images.

Extracting the first and second sets of facial landmarks from the first, second and/or third images may comprise first detecting and isolating the face in the respective image. This may include using a pre-trained machine learning model to detect the position and size of faces in the image. The pre-trained machine learning model may be a face recognition neural network.

Once the face is detected and isolated in the image, the face may be aligned to a standard reference frame before the facial landmarks are extracted. Therefore, the faces in the second and third (or first) images may be more accurately compared even if the orientation and size of the faces in the images are different to each other.

The first set of facial landmarks may be compared to the second set of facial landmarks to calculate a similarity score or a confidence level. The similarity score or confidence level may indicate the amount of similarity (or difference) between the face of the person detected in the first image and the face in the second image. Comparing the facial landmarks may involve using a machine learning model or statistical techniques to determine the differences between the facial landmarks.

For example, the similarity score may be generated by calculating a cosine distance between the first and second set of facial landmarks. The cosine distance may be calculated according to:

$$similarity(A, B) = \cos(\theta) = \frac{A \cdot B}{\|A\| \|B\|}$$

where A and B are vectors representing the first and second sets of facial landmarks, $\theta$ is the angle between the vectors, A·B is the dot product between A and B, and $\|A\|$ represents the magnitude of a vector.

The person on the photo ID may be determined to be the person detected in the first image if the similarity score or confidence level exceeds a predetermined minimum similarity threshold. The predetermined minimum similarity threshold may be between 60% to 99%, more preferably 65% to 80%, more preferably 70%. Scenarios requiring highly accurate facial matches may require a facial similarity score of at least 99% for a positive facial match. However, the present inventors have found that by relaxing the minimum similarity threshold to about 70% a more reliable determination of similarity can be provided which is suitable for the present application. This is because photo IDs can be old, degraded and/or of low quality. For example, the quality of the photograph on the photo ID may be low or the person's photograph on the photo ID may show the person when they were younger. Therefore, by employing a lower similarity threshold than traditional comparison modules, the system is more suited to comparing old or low quality photo IDs.

In some examples, the third image may be one of a third plurality of images (i.e., a third set of images). For example, the third plurality of images may comprise two images, more preferably four images, more preferably five images of the person's face. The computer-implemented method may comprise tracking the person's face in each of the third plurality of images.

In this example, a plurality of first sets of facial landmarks may be calculated for each of the images in the third set of images. Each set of facial landmarks may be compared to the second set of facial landmarks extracted from the photo ID to determine a plurality of similarity scores. If at least two, more preferably three, more preferably five of the similarity scores exceed the predetermined similarity threshold then the person in the third set of images may be determined to be the person in the photo ID.

Alternatively, the plurality of first sets of facial landmarks may be averaged to provide an averaged set of facial landmarks for the person in the third set of images. The averaged set of facial landmarks may be compared to the second set of facial landmarks to calculate a similarity score as described above.

In this way, a more accurate comparison of the face in the third set of images with the face on the photo ID may be performed than if a single image was used.

The text recognition module for extracting the date of birth from the second region of interest may comprise an Optical Character Recognition (OCR) model which is configured to use deep learning algorithms to recognize and extract text from images or scanned documents. Once the first region comprising the DOB is identified, the text recognition model may extract the individual characters or words from the region. This may include analysing the visual features of each character, such as its shape, size, and texture, and comparing it to a set of pre-trained patterns.

After the DOB has been extracted, the stated age of the person on the ID may be calculated by comparing the DOB to a system clock to determine how much time has elapsed since the DOB.

As mentioned above, the computer-implemented method may comprise enabling or rejecting an automated transaction based on the stated age which was calculated from the date of birth on the ID. For example, the person whose age is being verified may be a customer or a client and the age verification process may be used by a shop or service provider to determine if age restricted goods or services may be sold to the customer or client.

The method may comprise comparing the stated age determined from the photo ID to a verified threshold age (which may also be referred to as a restriction age, or a predetermined threshold age). The method may further comprise providing an indication that the person is above the verified threshold age. For example, if the stated age of the person on the photo ID is higher than the predetermined threshold age and if the person in the first image is determined to be the person on the photo ID, then the person may be classified as overage (i.e., older than the verified threshold age).

Note, if the person detected in the first image (or first set of images) is determined to be the person in the photo ID, then the stated age calculated from the date of birth on the ID may be referred to as a verified age of the person.

In some examples, the computer-implemented method may comprise displaying the stated age on a display screen and/or communicating the stated age to a peripheral system such as an automated transaction machine.

The predetermined threshold age may be a restriction age for buying age-restricted goods or services. Therefore, the computer-implemented method may comprise enabling or rejecting a transaction based on the stated age. For example, the computer-implemented method may comprise providing a control signal to an automated transaction system for enabling or prohibiting a transaction. For example, if the person detected in the first image is not determined to be the person on the ID, then the transaction may be rejected.

Similarly, if the stated age of the person on the ID is lower than the predetermined threshold, then the transaction may be rejected. However, if the stated age of the person on the ID is higher than the predetermined threshold age and the person in the first image is determined to be the person in the ID, then the transaction may be enabled.

When the computer-implemented method comprises estimating the age of the person in the first image, the estimated age may be generated using an age estimation neural network.

The age estimation neural network may be configured to receive a vector of facial landmarks as an input for estimating the person's age. For example, a cropped image of the detected face from the face recognition module may be provided to a facial landmarks generator which is configured to determine a vector comprising the coordinates of facial landmarks. For example, the facial landmarks generator may be configured to generate coordinates for between 40 to 80, more preferably 50 to 70, more preferably 60 facial landmarks of the face in the first image. The age estimation neural network may be configured to output an estimated age of the person in years. However, in other examples, the age estimation neural network may be configured to categorise the person in the first image into one of a plurality of age categories. For example, the age categories may include "child", "youth", "young adult", "adult", and/or "elderly adult". In some examples, the age estimation neural network may comprise a binary classifier configured to determine if the person in the first image is older or younger than a predetermined threshold age (e.g., 25 years old, 18 years old etc).

The age estimation neural network may be a regression network comprising a plurality of individual sub neural networks configured to categorise the person into demographic categories such as age, gender and/or race categories. The individual sub neural networks may be configured to refine the age of the person into increasingly narrower age brackets until an estimated age of the person is determined.

The regression network may comprise a first tier neural network which is configured to receive the cropped image of the face (or the facial landmarks extracted from the cropped image) and generate an initial age estimate of the person.

If the initial estimated age of the person is within a priority age bracket, then one or more additional (i.e., second, third, fourth etc tier) neural networks may be used to refine the estimated age. However, if the initial estimated age is outside the priority age bracket, then the initial estimated age may be output as the estimated age of the person.

If the initial estimated age of the person is within the priority age bracket, then an additional (second tier) neural network may be used to classify the person in the cropped image by skin tone and/or by gender.

By training a multiple tier neural network in this way the network can be more accurate at estimating the age of each type of people since it is trained to recognise the specific age related characteristics. Accordingly, the age estimation network may be less biased to specific demographics than networks which are not divided in this way.

An overall estimated age of the person may be generated or an indication of whether the person is older or younger than a threshold ag (e.g. the challenge threshold age).

By performing the age estimation with progressively specialised neural networks in this manner, a more accurate estimation of the person's age may be generated since each network can be tailored specifically thereby reducing bias and improving performance of the age estimation.

In some examples, the method may comprise estimating the age of the person from a plurality of images (i.e., frames) containing the person's face. For example, between 2 to 20, more preferably at least 3, frames may be analysed to generate the estimated age of the person. In this way, frames which result in outlier results may be ignored (as discussed in more detail below) thereby increasing the accuracy of the age estimation.

For example, the method may comprise detecting at least two, more preferably at least three, valid frames, before an age estimation is determined from the valid frames. After the required number of valid frames are received, the estimated age may be determined from a rolling average of the face which was detected in the most recent valid frames.

A valid frame may be a frame which includes a real (live) face, and which is determined to be within a pose restriction. For example, the pose restriction may be a restriction limit to the angle of the face in the frame relative to an optical axis of the imaging device. For example, the pose restriction may be <45 degrees, more preferably <35 degrees from the optical axis of the imaging device. The present inventors have found that by restricting the angle of the face in this way, a more accurate estimation of the person's age may be determined.

A tracking algorithm may be used to track and capture the person's face in each of the plurality of images (or in each of the valid frames of the plurality of images). An estimated age may then be generated for each of the plurality of images as described above thereby providing a plurality of estimated ages for the person. An overall estimated age may be determined by calculating an average of the estimated ages. Therefore, multiple views of the person's face can be used to generate the age estimate thereby increasing the accuracy of the estimated age.

The computer-implemented method may comprise ignoring outlier estimates when calculating the average estimated age of the person. For example, if the person is classified as male in 19 out of 20 images and female in 1 out of 20 images then the image in which they appear to be female may be ignored. Therefore, the average estimated age may be calculated by averaging only the estimated ages that were generated by the specific neural networks. In a different example, if a person is estimated to be between 20 and 22 years old in 19 images but was estimated to be 52 years old in 1 image, then the single outlier image may be ignored. By ignoring images with outlier results images with bad lighting or with unusual artefacts which may affect the estimated age can be ignored and the overall estimated age of the person may be more accurate.

The computer-implemented method may comprise providing an indication that the person is above a required age, if the estimated age of the person in the first image is older than a predetermined threshold age. For example, the predetermined threshold age may be 25. If the person is estimated to be older than the predetermined threshold age, then a control signal may be provided to an automated transaction system to enable the transaction of age restricted goods or services. However, if the person is estimated to be younger than the predetermined threshold age then they may be requested to provide a photo ID to verify their age.

The computer-implemented method may comprise providing an indication that the person is younger than the required age if the estimated age of the person in the first image is younger than a minimum threshold age. The method may comprise requesting the second image of the photo ID only if the estimated age of the person is older than the minimum threshold age. For example, the minimum threshold age may be 14 years old in the context of buying alcohol which has a restriction age of 18. Therefore, the age verification system can avoid requesting photo ID from a person who is clearly much younger than the restriction age.

Therefore, by estimating the age of the person in the first image, the age verification system may determine quickly if the person whose age is being verified is clearly older or younger than a required age. Accordingly, the verification process can be implemented quicker and more efficiently than if a second image of an ID is requested every time a person is using the age verification system.

In some examples, the computer-implemented method may comprise using a spoof face detector (also referred to herein as a spoof detection module) to determine if the face in the first image is real or fake. The spoof detection module may be configured to detect false faces (which may also be referred to as "spoof" faces or false faces) in images from the camera (i.e., in the first image). In some examples, the spoof face detector may be embedded in the face recognition module. That is, the face recognition neural network may be configured (i.e., trained) to detect and ignore spoof faces in the field of view.

Spoof faces may include pictures of faces (e.g., on paper, or on a phone screen) being held up to a camera, a person wearing a mask, images on TVs in the background, animal faces, etc. The face recognition module may be configured to reject faces which are determined to be spoof faces as invalid.

In some examples, the spoof detection may include "liveness detection" wherein movement of the facial features is detected. Other examples may include using stereo cameras to check that the face detected in the field of view is three dimensional.

The computer-implemented method may comprise setting a spoof flag (e.g., setting a parameter in software to true or to 1 etc) if a face detected in the first image is determined to be fake. The spoof flag may be associated with the face that was determined to be fake and used to implement a temporary ban on that face. For example, if a spoof flag associated with a face is set to true, then the method may comprise ignoring that face for a predetermined period of time. The predetermined period of time may be between two to twenty seconds, more preferably between three to ten seconds, more preferably five seconds. By imposing a temporary ban on a face determined to be a false, the likelihood of the system erroneously classifying that face as real in subsequent images is reduced. In some examples, the age verification system may be configured to restart the age verification routine when the spoof detection module detects a false face. Accordingly, detecting false faces in the first image can increase security of the age verification process by preventing underage persons from pretending to be someone else by holding up a picture to the camera.

The computer-implemented method may further comprise authenticating the ID. For example, authenticating the ID may comprise illuminating the ID with UV light. By illuminating the ID with UV light UV security tokens in the ID, which are commonly used to prevent the use of fraudulent IDs, may become visible thereby providing a means to authenticate the ID as a valid form of ID.

The computer-implemented method may comprise receiving an additional image (i.e., a fourth image) of the illuminated ID (i.e., from the camera) and determining from the image if the illuminated ID comprises predetermined security features.

The predetermined security features may be UV-reactive features, such as UV ink or UV watermarks. The UV-reactive features may be visible in the additional image as glowing or fluorescent patterns that are not visible under normal lighting conditions. Therefore, determining if the illuminated ID comprises predetermined security features may comprise comparing UV-reactive features in the additional image to expected UV-reactive features for the type of ID. For example, passports may have UV-reactive fibres or printing that glows under UV light, while driver's licenses may have UV-reactive inks that create specific patterns or images.

Authenticating the ID may comprise detecting fluorescing areas in the fourth image which indicate regions of UV reactive features (i.e., rather than identifying the specific features themselves). In some examples, an artificial neural network (ANN) may be configured to receive the fourth image of the illuminated ID and determine if the fourth image comprises fluoresced areas in expected regions of the photo ID.

The ANN may be a binary classifier that is configured to receive an image of the UV illuminated ID and output a binary classification indicating whether the ID is fake or not fake based on the presence of fluoresced regions in the image. A benefit of this technique is that the ANN may be trained to validate illuminated IDs by providing it with examples of valid, illuminated IDs. There is no need to provide the ANN with specific knowledge of the security features in each type of ID. Therefore, the validation of the ID may be quicker and more efficient than if a database was to be stored and consulted for identifying specific UV features.

In this way, the detection rate of false IDs may be improved compared to systems which only use images of IDs comprising visible light thereby improving the security of the age verification process.

The UV light for illuminating the ID may be long-wave UV (UV-A) light. For example, the UV light for illuminating the ID may have a wavelength between

300nm and 400nm, more preferably between 350nm and 380nm, more preferably 365nm. Such wavelengths of UV light are particularly suitable for illuminating features which are not visible to the naked eye such as fluorescent inks, fibres, or security threads.

The ID may be illuminated by a pulse of UV light having a duration of 5ms to 100ms, more preferably 10ms to 50ms, more preferably 10ms to 20ms. The present inventors have found that a pulse of UV light of this duration is suitable for minimising the exposure of users to UV light while ensuring that the camera is able to capture enough information for identifying any security tokens in the ID.

The computer-implemented method may comprise displaying images from a camera on a display screen, the images containing/capturing a field of view of the camera. For example, the camera may be configured to continuously film the field of view of the camera. Accordingly, the computer-implemented method may comprise displaying the field of view on the display screen.

The computer-implemented method may comprise displaying the field of view of the camera on a screen, wherein faces in the field of view detected by a face recognition module are highlighted on the screen. For example, a face detected by the face recognition module may be displayed on the screen inside a box.

In some examples, the computer-implemented method may comprise displaying a target area on the display screen for positioning the ID in the field of view. For example, the target area may be a bounding box such as a rectangle corresponding the shape of an ID card. The target area may be displayed on the display screen after the first image is received and/or when or after the photo ID has been requested.

The computer-implemented method may comprise detecting when the photo ID is positioned within the field of view in the target area being displayed on the screen. An indication may be provided when the ID is detected within the target area. For example, an indication may be displayed on the screen when the ID is positioned in the target. For example, when the target area comprises a rectangle, the method may comprise changing a colour of the rectangle when the ID is detected in the rectangle.

The computer-implemented method may comprise receiving the second image when the ID is detected in the target area. For example, receiving the second image may include detecting an ID in the target area in one of a plurality of images received from the camera and storing that image as the second image for analysing the ID.

The target area may be configured to define a position in the field of view of the camera wherein the ID is in focus. In some examples, the target area may be configured to define a position in the field of view of the camera wherein the ID may be illuminated by UV light for UV authentication. In this example, the target area may be configured to define a position for the ID wherein the UV illumination may be blocked by the ID, thereby protecting the person from the UV illumination. Therefore, if the person is holding the ID, their exposure to the UV illumination may be reduced.

In some examples, when the ID is determined to be a recognised type of ID (e.g., by the ID processing neural network) an indication may be provided that the ID is recognised. For example, the target area on the display screen may change colour, an audio cue may sound, or an LED may light up to indicate that the ID is an acceptable form of ID. Likewise, the method may comprise providing an indication when the person in the first image is determined to be the person on the ID and/or the calculated age of the person from the ID is determined to be equal to or higher than a threshold age.

The computer-implemented method may comprise restarting the age verification routine if the second image comprising the ID is not received after a predetermined period of time. For example, the computer-implemented method may comprise starting a timer when a face is detected in the first image, and if the second image containing an ID is not received after the timer has reached the predetermined period of time the age verification process may be restarted (i.e., the age verification system will look for a new first image containing a face). Therefore, if the person cannot produce a valid ID to display, or the person exits the field of view, then the routine may automatically restart.

In some examples, the computer-implemented method may comprise restarting the age verification routine if a face belonging to a new person (i.e., not the person in the first image or a face on an ID) is detected in the field of view of the camera. Therefore, if a new person is using the age verification system, then the routine may restart in order to verify the new person's age.

The computer-implemented method may be performed locally on a computing device (e.g., a processing unit), the computing device being in communication with the camera. Therefore, the person's age may be verified without requiring an internet or a network connection thereby providing a faster and more efficient age verification process. Additionally, the age verification process is more secure since personal data (including the images of a face and the information extracted from the ID) can be processed locally.

When the computer-implemented method is configured to be performed locally, the computer-implemented method may comprise deleting the first and second images from memory. Additionally, the method may comprise deleting the extracted DOB from memory and any other data included on the photo ID. Accordingly, personal data belonging to the person whose age is being verified e.g., the image of their face and the information on their ID, may be only temporarily held for age verification thereby increasing the security of the age verification system.

In some examples, the computer-implemented method may comprise using the text recognition module to extract the date of birth from the second region of interest and calculate the stated age of the person on the ID, only if the person in the first image was determined to be the person on the ID by the face comparison module. In other words, if the person in the first image is determined to be the person on the ID, then the text recognition module may be used to extract the date of birth from the second region. Therefore, the age verification process may be implemented faster since redundant steps (i.e., performing text recognition on the ID) may be omitted if the ID is determined to be not valid.

In general, the steps of the first aspect may be performed in any suitable order.

For example, the text recognition module may be used to extract the date of birth on the ID and calculate the stated age of the person on the ID before the face of the person in the first image is compared to the face on the photo ID. However, in other examples, the face of the person in the first image may be compared to the face on the photo ID before the date of birth is extracted from the ID. Therefore, if the ID does not belong to the person in the first image, then the text recognition module may not be used to extract the date of birth since the photo ID may be classified as invalid.

In a second aspect of the present invention there is provided an age verification system configured to perform the computer-implemented method of the first aspect.

Specifically, there is provided an age verification system according to claim 15.

The age verification system of the second aspect may comprise a display screen. The display screen may be configured to display images (i.e.,) a field of view from the camera.

The age verification system may comprise a UV illuminator for authenticating the ID. That is, the UV illuminator may be configured to illuminate the ID with UV light. For example, the UV illuminator may be an LED configured to provide light having a wavelength between 320nm - 400nm, more preferably between 350nm to 380nm, more preferably 365nm.

For the avoidance of doubt, the age verification system of the first aspect may be configured to perform any of the optional features of the first aspect.

For example, the computing device may further comprise an age estimation module for estimating the age of the person in the first image and/or an ID authentication module for authenticating the ID and/or a spoof detection module for detecting false faces in the false image as described above in relation to the first aspect.

In a third aspect of the present invention there is provided an automated transaction machine comprising the age verification system of the previous aspect.

For example, the automated transaction machine may comprise a product scanning device and a money handling device, such as a card reader or cash handling machine, for making automated transactions.

Additional aspects of the invention may relate to systems configured to execute the computer-implemented method of any one of the first aspect of the invention. Specifically, the system may comprise a processor which is configured to execute the respective computer-implemented methods of the first, second, and third, aspects of the invention.

Additional aspects of the invention may provide a computer program comprising instructions which, when the program is executed by a computer, cause the computer to carry out the steps of a computer-implemented method of any one of the first aspect of the present invention. The computer program may take the form of a non-tangible computer program product comprising said instructions.

Further aspects of the invention may provide a computer-readable storage medium, having stored thereon the computer program of the previous aspects of the invention. Additionally aspects of the invention may provide a computer-readable storage medium, having stored thereon instructions which when executed by a computer cause the computer to perform the computer-implemented method of the first aspect of the invention

The invention includes the combination of the aspects and preferred features described except where such a combination is clearly impermissible or expressly avoided.

## Summary of the Figures

Embodiments and experiments illustrating the principles of the invention will now be discussed with reference to the accompanying figures in which:

Fig. 1 shows an age verification system according to aspects of the present invention;

Fig. 2 is a high level flowchart illustrating an exemplary process for verifying a person's age according to aspects of the present invention;

Fig. 3 shows an age verification system which may be configured to execute a computer-implemented method according to one or more aspects of the present invention;

Fig. 4 is a flowchart illustrating an exemplary process for checking a person's age according to aspects of the present invention;

Fig. 5 is a flowchart illustrating an exemplary process for analysing an ID according to aspects of the present invention;

Fig. 6 is a flowchart illustrating an exemplary process for authenticating an ID according to aspects of the present invention;

**Fig. 7** is a flowchart illustrating an exemplary process for estimating a person's age;

**Fig. 8** shows an example display of the age verification system; and

**Fig. 9** shows another example display of the age verification system.

### *Detailed Description of the Invention*

Aspects and embodiments of the present invention will now be discussed with reference to the accompanying figures. Further aspects and embodiments will be apparent to those skilled in the art.

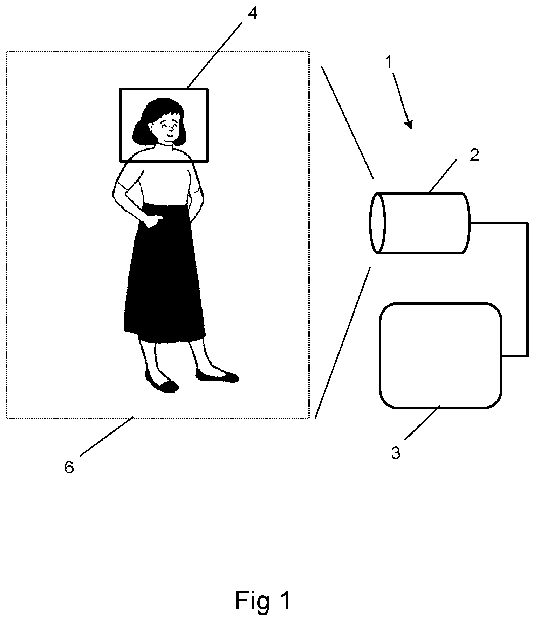

Fig.1 shows a person using an age verification system 1 for verifying a person's age according to aspects of the present invention.

The age verification system 1 comprises a camera 2 and a computing device 3.

The camera 2 is configured to capture images of people and objects positioned in a field of view 6 of the camera 2 and transmit the images to the computing device 3. For example, the camera 2 may be configured to capture a live stream of the field of view 6 wherein multiple images of the field of view 6 are captured at a predetermined frame rate and continuously transmitted to the computing device 3. In other examples the camera 2 may be configured to take images which are stills captured a predetermined time apart or upon command by the computing device 3.

The computing device 3 which may be any suitable processing unit, computer or server for processing images configured to receive images of the field of view 6 from the camera 2.

Specifically, the computing device 3 is configured to receive a first image of the person and detect a face 4 of the person in the first image. After the first image is received the computing device is configured to receive a second image of an identification document (ID), wherein the ID is a photo ID comprising a photograph of a face. The computing device is configured to analyse the second image to determine if the photo ID belongs to the person detected in the first image and to determine a stated age of the person on the photo ID from a date of birth displayed on the ID.

If the person detected in the first image is determined to be the person on the photo ID, then the stated age is classified as the verified age of the person. In applications described herein the verified age is used to enable or reject transactions such as the sale of age-restricted goods or services.

In some examples, the computing device 3 is configured to estimate the age of the person from the face 4 in the first image. In these examples, the computing device 3 is configured to request the person to present their photo ID only if the estimated age of the person in the first image is below a challenge threshold age.

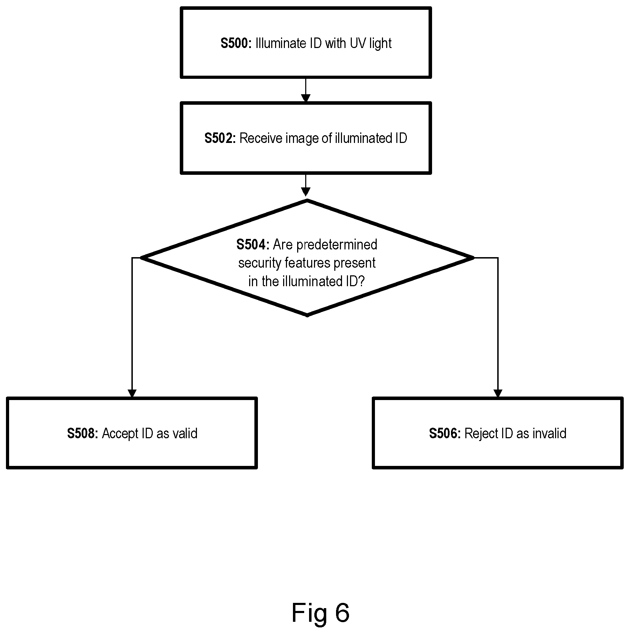

In some examples, the computing device is configured to authenticate the photo ID in the second image to determine if the photo ID is fake. As described below in relation to Fig. 6 authenticating the ID includes illuminating the ID with a UV light as discussed in detail below.

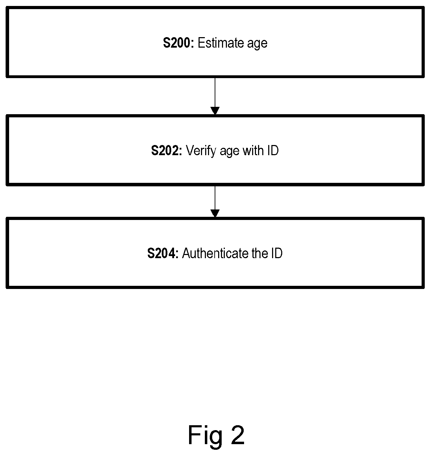

Fig. 2 is a high level flowchart illustrating an exemplary process for verifying a person's age (e.g., using the age verification system of Fig.1) according to the present invention.

In step S200 images of a field of view are received from the camera and a first neural network is used to detect a face in the field of view and track the face as it moves from image to image. A neural network is used to generate an estimated age of the person.

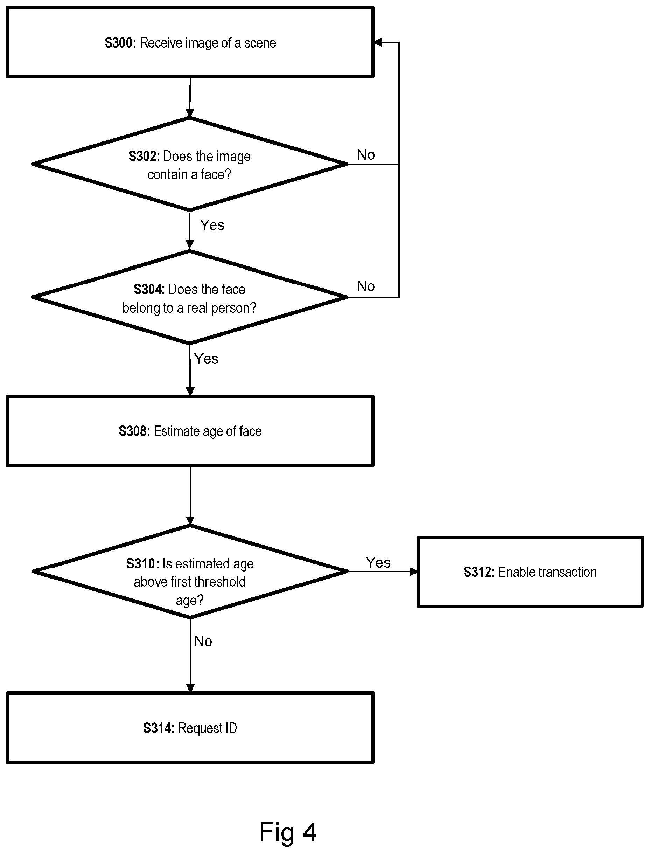

If the estimated age of the person is below a threshold challenge age, then the person is requested to present a photo ID card to the camera. This step is described in more detail below in relation to Fig. 4.

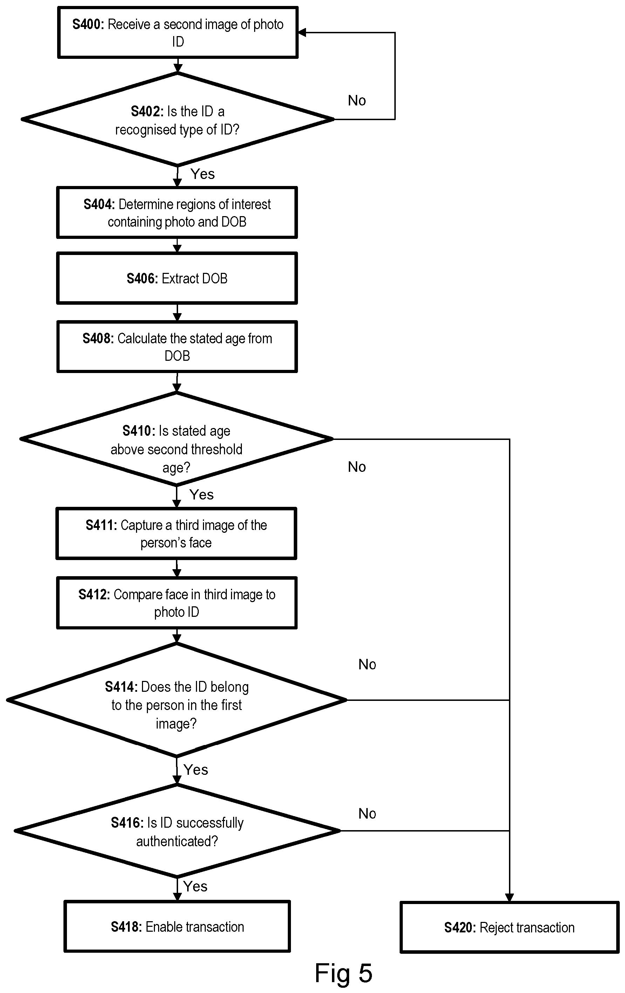

Next, in step S202 the person's age is verified using a second neural network to analyse a second image of the person's photo ID and a text recognition module to extract information from the photo ID. As described below in reference to Fig.5, this step comprises extracting a date of birth of the person from the photo ID to calculate the person's stated age and determining if the person on photographed on the ID is the same as the person in the first image.

Finally, in step S204 the photo ID is authenticated using UV light to ensure that the ID is authentic and not a fraudulent photo ID. This step is explained in more detail below in relation to Figures 4 to 6.

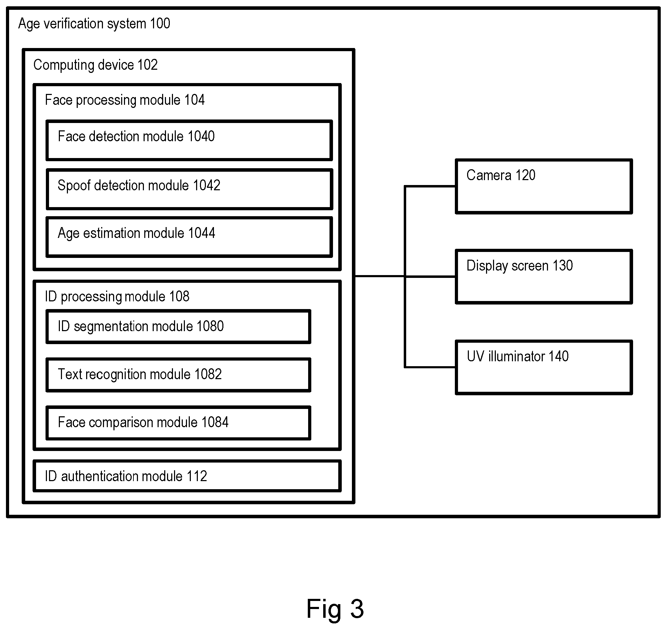

Fig. 3 shows an age verification system 100 which is configured to execute the age verification process of Fig. 2.

The age verification system 100 includes a computing device 102 connected to a camera 120 as described above in relation to Fig. 1. Additionally, the age verification system 100 comprises a display screen 130 and a UV illuminator 140 connected to the computing device 102. For example, the computing device 102 may be connected to the camera and/or the display screen and/or the UV illuminator via a wired or wireless connection(s).

The age verification system 100 may form a stand-alone system for verifying a person's age. For example, the system may be used by staff members of an age restricted premises (e.g. a bar or club) to verify people's ages.

In other examples, the age verification system 100 may form part of a wider system such as an automated transaction system such as a self-check-out machine in a shop. In this example, the computing device 102 may be configured to enable or reject a transaction based on the verified age of the person. For example, if the verified age is above a verified threshold age the transaction may be rejected.

In some examples, the hardware comprising the computing device 102, the camera 120, the display screen 130 and/or the UV illuminator 140 may be part of an existing automated transaction system such as a self-check-out machine. In this example, the automated transaction system may be configured to perform computer-implemented methods described here, for example, by installing a USB device or by downloading a plug-in.

The display screen 130 may be any suitable screen configured to display instructions and/or status updates to users of the age verification system 100. For example, the display screen 130 may be an LCD, OLED, LED display, or CRT. As mentioned above, the camera 120 may be configured to continuously film the field of view of the camera 120 and the display screen 130 may be configured to continuously display the field of view.

The UV illuminator 140 is configured to illuminate ID cards held in the field of view of the camera 120 in order to authenticate the ID as described below. For example, the UV illuminator 140 may be a UV LED, or a halogen, fluorescent, or incandescent light source (i.e., a light bulb or tube).

The computing device 102 comprises a face processing module 104 for detecting and analysing a face in the field of view of the camera 120, an ID processing module 108 for analysing a photo ID which is presented to the camera 120, and an ID authentication module 112 for determining if the photo ID is authentic or fake.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by a processor, cause the processor to perform a particular function), or in a combination of both.

The face processing module 104 comprises a face detection module 1040, a spoof detection module 1042, and an age estimation module 1044. The face detection module 1040 is configured to receive images from the camera 120 and detect a first image comprising a face in the field of view of the camera. The spoof detection module 1042 is configured to analyse the first image and determine if the face in is a "live" face or if the face is fake (e.g., a photograph of a face). Typically, the spoof detection module 1042 is part of the face detection module 1040 wherein the face detection module 1040 is configured to ignore faces which are determined to be fake. The age estimation module 1044 is configured to generate an estimated age of the person whose face was detected in the first image.

The ID processing module 108 is configured to receive images from the camera 120 and detect a second image comprising a photo ID card positioned in the field of view of the camera 120. The ID processing module 108 comprises an ID segmentation module 1080, a text recognition module 1082, and a face comparison module 1084.

The ID segmentation module 1080 comprises an ID processing neural network configured to detect the photo ID in the second image, determine if the photo ID is a recognised type of ID, and identify regions of interest on the ID. The recognised types of ID are types of photo ID that the ID processing neural network has been trained to recognise. For example, the ID processing neural network may be configured to recognise various photo ID cards from a plurality of jurisdictions and/or countries and identify the regions of interest on those types of photo ID.

The regions of interest include a first region in which a date of birth on the ID is located and a second region in which the photograph on the ID (i.e., comprising a picture of a face) is located. In some examples, the display screen may be configured to display a bounding box around the photo ID and/or the regions of interest to indicate that the photo ID has been identified.

The text recognition module is configured to extract the date of birth from the first region of interest and calculate the stated age of the person on the ID from the date of birth. For example, the computing device may comprise or be connected to a system clock for providing the current date and the stated age of the person may be calculated by subtracting the date of birth from the current date.

The face comparison module 1084 is configured to capture an additional image of the person that was detected in the first image and compare the face of the person in the additional image to the face on the photo ID in the second image. The face comparison module 1084 can then determine if the person detected in the first image is the same as the person on the photo ID.

Finally, the computing device comprises an ID authentication module 112 for verifying if the ID in the second image is authentic (i.e., not fraudulent). The ID authentication module 112 is configured to provide a control signal to the UV illuminator 140 to illuminate the ID in the field of view with UV light. An image of the illuminated ID is then received from the camera 120 and analysed to detect the presence of expected UV security features of the ID.

Accordingly, if person on the ID is determined by the face comparison module to be the person from the first image, and the ID is determined to be authentic, then the age verification system 100 may assert that the stated age on the ID is the verified age of the person in first image.

The following figures are used to describe the function of each module of the age verification system 100 in more detail. In the following examples, the age verification process is described in the context of enabling or rejecting a transaction. However, the age verification system 100 may also be used for other applications. For example, the verified age of the person may be displayed on a screen or transmitted to a separate server or controller. In other examples, the computing device 102 may simply provide an indication that the person is above a predetermined threshold age (e.g., by playing an audio cue or by sending a control signal to a light to turn red or green).

Fig. 4 is a flowchart illustrating an exemplary process for estimating a person's age according to aspects of the present invention. The steps described in Fig. 4 may be considered as sub-steps of step S200 in Fig. 2.

In step S300 the computing device 102 receives an image of a scene from the camera 120.

Next, in step S302 the face detection module 1040 is used to determine if the image of the scene comprises a face. The face detection module 1040 comprises a face recognition neural network which is configured to identify the facial features of humans in images. If the image of the scene comprises a face, then the area of the image in which the face is located is stored for further processing and the process proceeds to step S304.

If a face is not detected in the image, then steps S300 and S302 may be repeated with subsequent images from the camera 120 until a first image comprising a face is detected.

In step S304 the spoof detection module 1042 is used to determine if the face detected in step S302 is a real face belonging to a live person who is stood in the field of view of the camera 120. In some examples, S302 and S304 may be performed at the same time, wherein the face recognition neural network is configured to detect and ignore spoof faces in the field of view so that there is no valid detection if a "live" face is not present.

If the face in the first image is determined to be a real face then, the process proceeds to step S308. However, if the face is determined to be a false face (for example, a photograph of a face), then the preceding steps S300 - S304 may be repeated until a first image is received in which a real face is detected in the field of view. In some examples, a transaction may be disabled upon detection of a false face in the field of view. For example, if the age verification system 100 is being used to verify a person's age to buy age restricted goods or services then the transaction may be rejected if the detected face is false.

In some examples, steps S300 - S304 may be performed continuously so that the face is continuously detected in a plurality of image from the camera. In these examples, the face recognition module is configured to track the face between images.

In step 308 the age estimation module 1044 uses an age estimation neural network to estimate the age of the person in the first image.

In some examples, the age estimation module 1044 may be a binary classifier configured to determine if the person in the first image is above or below the threshold challenge age. Therefore, the output from the age estimation module may be a binary result, indicating whether the person is estimated to be over or underage. In other examples the output from the age estimation module may be a specific estimated age (e.g., in years).

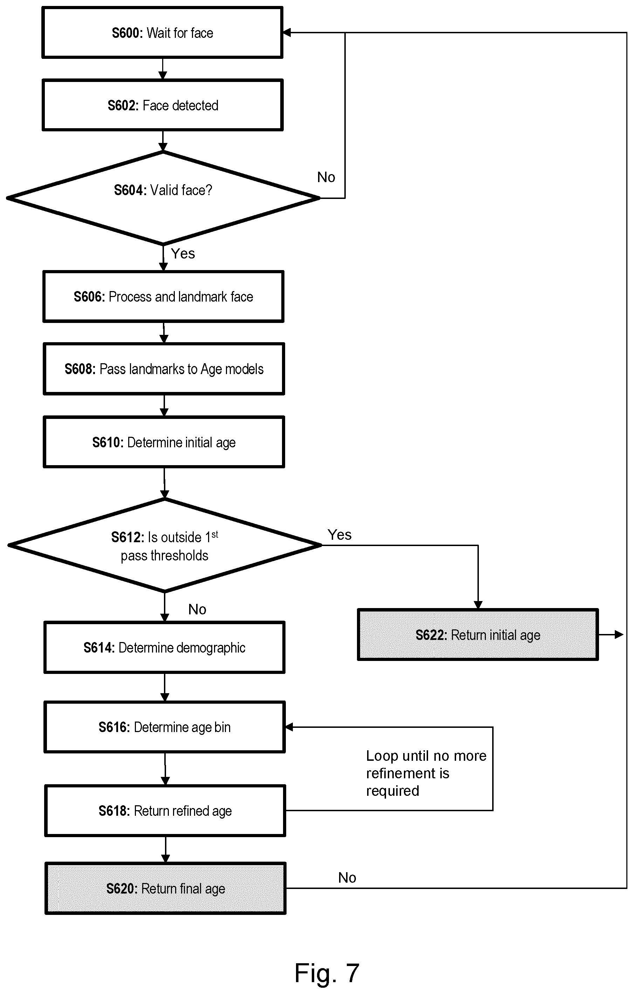

A process for estimating the person's age is described in more detail below in relation to Fig. 7 wherein the age estimation neural network is a regression network comprising a plurality of individual sub neural networks configured to categorise the person into demographic categories.

In step 310 the estimated age is compared to a first threshold age. For example, the first threshold age may be a challenge threshold age which is older than a required age to buy age restricted goods or services. For example, in the UK the challenge threshold age in step S310 may be 25 for determining if the person may be allowed to purchase alcohol.

If the estimated age of the person is determined to be higher than the threshold challenge age, then the process proceeds to step S312 where the transaction is enabled. For example, this step may comprise providing a control signal to an automated transaction machine to enable the person to purchase age-restricted goods or services. After the transaction is enabled, the age verification process may be restarted so that new images from the camera 120 may be assessed to detect a new person using the age verification system 100.

Alternatively, if the estimated age of the person is determined to be lower than the threshold challenge age then the process proceeds to step S314 where the person is requested to present a photo ID card to verify their age. For example, the request may be displayed on the display screen 130 as text message or an audio track may be played requesting the person to present their photo ID.

In some examples, multiple images (i.e., images) may be received from the camera and used to generate an estimated age of the person. In these examples, if a majority of the estimated ages (from each image) is lower than the threshold challenge age then the process proceeds to step S314 to request a photo ID. However, if a majority of the estimated ages is higher than the threshold challenge age, then the process proceeds to step S312 where the transaction is enabled.

For example, after detecting a face in an image from the camera the computing device may be configured to capture five images from the camera. Each frame may contain a view of the person's face from a slightly different angle as the person moves in front of the camera. The computing device may track the person from frame to frame to ensure that each image contains the same person.

Next, the age estimation network is used to generate an estimated age for each frame. If the estimated age is higher than the challenge threshold age in three out of the five images then the transaction may be enabled, else the person is requested to present their photo ID to the camera.

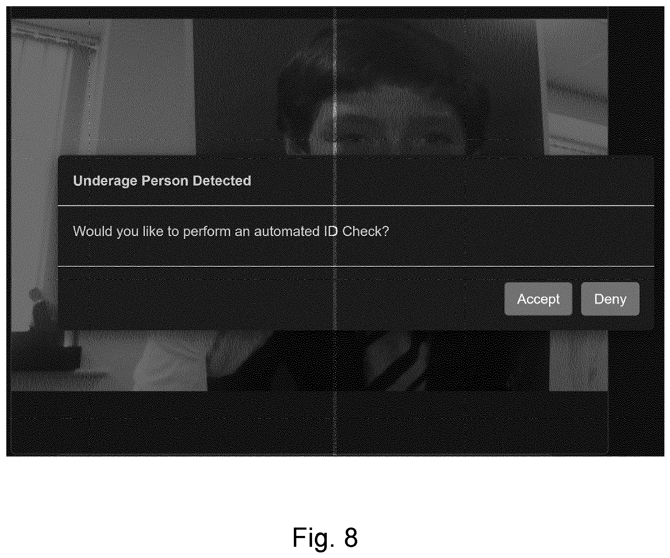

Fig. 8 shows an example of display screen 130 displaying a message asking a person, who was determined to be younger than the challenge threshold age, if they would like to perform an automated ID check. If the person indicates that they wish to perform an ID check (i.e., by selecting "accept" on the screen) then the process will proceed to verify the person's age according to Fig. 5.

Fig. 5 is a flowchart illustrating an exemplary process for verifying a person's age by analysing images of a photo ID. The steps described in Fig. 5 may be considered as sub-steps of step S202 in Fig. 2.

In step S400 the ID processing module receives a second image from the camera 120 containing an ID, wherein the ID is a photo ID comprising a photograph of a face.

In step S402 the ID segmentation module uses an ID processing neural network to determine if the ID is a recognised type of ID. If the ID is not recognised as a type of ID that the ID segmentation module 1080 is configured to recognise, then steps S400 and S404 are repeated until a second image is detected comprising a recognised type of ID. However, if the ID is recognised then the process proceeds to step S404.

The photo ID may be any suitable form of photo ID for proving a person's age. For example, the ID may be a driver's license, a passport, or a European ID card. The ID segmentation module may be configured to recognise types of ID from a plurality of countries and jurisdictions.

A target area (e.g. a rectangle) for receiving the photo ID may be indicated on the display screen 130 as a bounding box overlaid on the field of view of the camera. Therefore, the person may move their ID card around the field of view of the camera 120 until it is successfully identified by the ID segmentation module 1080. In some examples, the process may comprise providing an indication that the ID has been successfully recognised. For example, the bounding box on the display screen 130 may change colour or an audio cue may be played.

In step S404 the ID segmentation module used the ID processing neural network to determine regions of interest (i.e., segments) in the second image, wherein the regions of interest comprise a first region containing a date of birth on the ID and a second region of interest comprises the photograph on the ID.

The ID processing neural network may be configured to perform steps S402 and steps S404 concurrently. For example, the neural network may be trained using images of plurality of different types of ID to identify regions of interest on ID cards. Therefore, in this example, step S402 may not be an explicitly separate step to S404 but may instead be performed by one or more hidden layers of the ID processing neural network.

Advantageously, since the ID processing neural network has been pre-trained using a plurality of different types of photo ID, the age verification system 100 is able identify and process multiple types of ID cards offline without requiring a network connection to look up how to process each type of ID to extract the required information.

Moreover, since the process comprises receiving images of the ID, the person's age can be verified without requiring bespoke hardware to scan the ID.

If the photo ID in the second image is recognised as a type of ID that was used to train the neural network, then the ID segmentation module may output the regions of interest. However, if the photo ID presented in the second image is not recognised, then steps S400 to S404 may be repeated until the ID segmentation module is able to successfully identify an image comprising a recognised ID and the required regions of interest.

In step S406, the text recognition module 1082 is used to extract a date of birth that is written on the photo ID in the first region of interest. For example, the text recognition 1082 module may comprise an Optical Character Recognition (OCR) model configured to recognize and extract individual characters or words from the second region to determine the date of birth.

In step S408 the extracted date of birth is used to determine a stated age of the person on the ID. For example, a current date may be retrieved from a clock and the stated age may be calculated by calculating the elapsed years between the date of birth and the current date.

In step S410 the stated age on the ID is compared to a second threshold age to determine if the person is over or underage. The second threshold age may be lower than the challenge threshold age. For example, the second threshold age may be a required threshold age for purchasing age restricted goods or services. This is useful for verifying the age of people who appear to be older than they look. For example, if a person is determined by the age estimation module 1044 to be older than the required threshold age but younger than the challenge threshold age their ID would still be checked, reducing the chances for people being assessed incorrectly if they appear to be older than they actually are. For example, in the UK, the challenge threshold age may be 25 and the required threshold age may be 18 for allowing for prohibiting the sale of alcohol to the person using the age verification system 100.

If the stated age, calculated from the date of birth, is lower than the second threshold age then the person is classified as under-age and the process proceeds to step S420 where the transaction is rejected.

However, if the stated age calculated from the date of birth is the same as or higher than the second threshold age, the process proceeds to step S411 where an additional (third) image of the person is captured and temporarily stored for comparing to the photo ID.

In step S412 the face comparison module 1084 is used to compare the face of the person in the third image to the face on the photo ID.

For example, comparing the face of the person in the third image to the face on the photo ID may comprise: extracting a first set of facial landmarks from the face in the third image; extracting a second set of facial landmarks from the face in the second image; and comparing the first and second sets of facial landmarks to determine a similarity score indicating how similar (or different) the faces are to each other.

To extract the facial landmarks, first the faces are detected and isolated in each of the second and third images. This includes using a pre-trained machine learning model to detect the position and size of faces in the image. Once faces are detected in the second and third images, the faces are aligned to a standard reference frame so that they have a similar size and alignment. The facial landmarks are then extracted and compared directly to generate the similarity score.

In step S414 the comparison is used to determine if the person detected in the first image, and captured again in the in third image, is the same as the person on the ID. For example, if the similarity score calculated in step S414 is higher than a predetermined similarity threshold then the person in the third image is determined to be the person on the photo ID and the process proceeds to step S416.

However, if the similarity score is lower than the predetermined similarity threshold then the person in the third image is determined to be a different person to the person on the ID (i.e., the ID is classified as invalid). In this case, the process proceeds to step S420 wherein the transaction is rejected. A notification is generated indicating that the ID has been determined to be invalid. For example, a message may be displayed on the display screen 130 of an audio cue or a message may be played.

In some examples, the computing device may be configured to receive and temporarily store a plurality of additional images from the camera (e.g., 5 images). The person's face is tracked from image to image and a similarity score generated for each image as described above. If the similarity score is above the predetermined similarity threshold in a majority of the images, then the person in the plurality of additional images is determined to be the person on the photo ID. In this way, the system can accommodate for different poses and angles of the face as the person moves in front of the camera.

In step S416 the ID authentication module is used to authenticate the ID to determine whether the ID is authentic or fake. This step is explained in more detail below in relation to Fig. 6.

If the ID is successfully authenticated, then the stated age on the ID may be considered as the person's verified age. In this example, since the stated age has already been compared to a threshold age (in step S410) the person is classified as over-age and the process proceeds to step S418 where the transaction is enabled.

However, if the ID is not successfully authenticated, for example because it is a fake ID or is damaged, then the process proceeds to step S420 where the transaction is rejected because the person did not produce a valid form of photo ID.

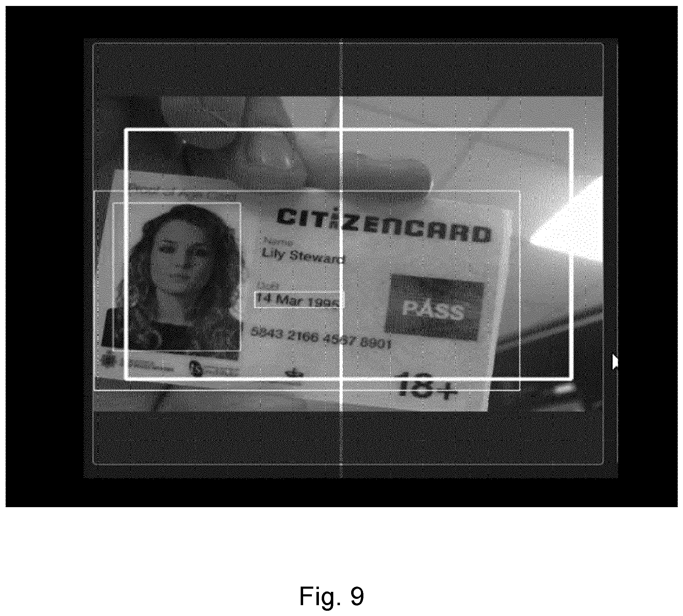

Fig. 9 shows an example of display screen 130 showing a field of view of the camera containing a photo ID card and a bounding box overlaid on the field of view of the camera. In addition, bounding boxes surrounding the regions of interest detected in step S404 are shown around the ID card, the photograph, and the date of birth on the photo ID.

Fig. 6 is a flowchart illustrating an exemplary process for authenticating the ID in the second image. The steps of Fig.6 may be considered as sub-steps of step S416 in Fig. 5.

In step S500 the ID authentication module 112 transmits a control signal to the UV illuminator 140 to illuminate the ID with UV light.

In step S502 an image of the illuminated ID is received from the camera 120.

The UV light ideally has a wavelength of 365nm for illuminating UV security features in the photo ID. The UV light is pulsed for e.g., 500ms during which the image of the illuminated ID may be received by the computing device 102. In examples where the camera 120 is configured to capture stills instead of continuously filming the field of view, the computing device is configured to instruct the camera 120 to capture the image of the illuminated ID during the pulse of UV light.

The target area displayed on the display screen 130 for positioning the ID in the field of view is configured to fill an area of the field of view that receives the largest portion of UV light thereby be ensuring that the ID is sufficiently illuminated to authenticate the ID. Additionally, by requiring the ID to be positioned in this way the ID itself can act as a shield between the UV illuminator 140 and the person who is presenting the ID, thereby providing protection for the user's eyes and skin from absorbing excess UV light.

In step S504 the ID authentication module 112 analyses the image of the illuminated ID using a neural network to determine if expected UV fluoresced regions are visible in the ID.

If the expected fluoresced regions are detected in the image of the illuminated ID then the process proceeds to step S508 where the ID is classified as an authentic ID (i.e., the ID has been successfully authenticated as a valid ID).

However, if the expected fluoresced regions are not detected in the ID, or the fluoresced regions do not correspond to the expected fluoresced regions for that ID, then the process proceeds to step S506 and the ID is rejected as invalid.

As described above in relation to Fig. 5, when the ID is successfully authenticated, the age verification system 100 may verify that the age of the person in the first image is the stated age calculated from the date of birth on the ID. Accordingly, a transaction may be enabled or rejected as appropriate based on the verified age. After the verified age has been determined the process is restarted so that a new person may verify their age by entering the field of view of the camera.

Other events may also cause the process to restart. For example, if a valid form of ID is not detected in a second image after a predetermined amount of time (e.g., 5 seconds) has elapsed since the first image was received or the ID was requested then the process may restart.

It should be noted that each of the steps described in Figures 4 to 6 may be omitted or performed in an alternative order to that shown. For example, the ID card may be authenticated with UV light before the date of birth on the ID is extracted or the faces of the person in the first image and on the ID are compared. Therefore, in this example, if the ID is a fake ID, then the steps of extracting the date of birth and comparing faces may be omitted since the ID is invalid thereby increasing the speed of the age verification routine in this example. Other steps may also be performed in a different order in this way.

Fig. 7 shows a process for estimating a person's age (for example as described above in relation to Fig. 4) using a regression network which is configured to determine an initial estimate of the person's age using a first neural network and then refine the age estimate using additional neural networks.

In step S600 the computing device 102 receives images of a scene from the camera 120 and in step S602, the face detection module 1040 is used to detect a face in the images.

In step S604 the face detection module 1040 determines if the detected face is a valid face. This includes determining if the face detected in step S602 is a real face belonging to a live person, and estimating a pose orientation of the detected face. If the face is a real face and the orientation of the face is within a pose restriction (for example withing 35 degrees of an optical axis of the camera), then the face is classified as a valid face.

Steps S600 to S604 are repeated until a valid face is detected in front of the camera 120. When a valid face is detected, the process proceeds to step S606 where facial landmarks are extracted from the valid face.

In step S608 the facial landmarks are provided to age models. The age models are a series of tiered sub-neural networks which form the regression network for estimating the person's age.

In step S610, a first tier neural network receives the facial landmarks and generates an initial age estimate for the person between 0 and 100 years old.

In step S612, the computing device 102 determines if the initial estimated age is inside or outside of a priority age bracket. If the initial estimated age is outside of the priority age bracket, then the initial estimate may be output as the estimated age of the person in step S622.

However, if the initial age estimate is within the priority age bracket, then the process proceeds to step S614 where the facial landmarks are provided to a second tier neural network which is configured categorise the person by demographic.

Next, in step S616, a third tier neural network, which is trained specifically on pictures of people in that demographic, is used to further refine the age estimate of the person. For example, the third tier network may categorise the person in to a lower or a higher age bracket ("age bin") within the priority age bracket.

One or more additional tiers of networks which are trained on data in each age category are then used to further refine the estimated age of the person. Increasingly refined estimated ages are generated in step S618, Steps S616-S618 are repeated until an overall estimated age is generated in step S620.

For example, steps S616-S618 may be repeated more for refined ages which are closer to the challenge threshold age (e.g., 25) or steps S616-S618 may be repeated fewer times for refined ages and estimated age bins which are further from the challenge threshold age. In this way, the age estimation process may be more efficient since the most accurate sub-neural networks need only be used to estimate the age of people who are close to the challenge threshold age.

After the final estimated age is generated, the age estimation process returns to step S600 to estimate the age of new people entering the field of view of the camera. The final estimated age may be used to determine whether to enable a transaction or to request an ID from the person as described above in relation to Figs. 4 to 6.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

**Claims**

1. A computer-implemented method of verifying a person's age, the method comprising:

   receiving a first image of the person,
   detecting a face of the person in the first image,
   estimating the age of the person in the first image, and
   if the estimated age is under a challenge threshold age:

   requesting and receiving a second image of an identification document (ID), wherein the ID includes a photograph of a face,
   determining regions of interest in the second image, the regions of interest comprising a first region containing date of birth information on the ID and a second region containing the photograph;
   using a text recognition module to extract a date of birth from the first region of interest and calculating a stated age of the person on the ID from the date of birth;
   determining if the person detected in the first image is the same as the person on the ID by receiving at least one additional image of the person, detecting a face of the person in each additional image, and comparing the face detected in each additional image to the face in the photograph; and
   outputting an age verification message based on the stated age of the person on the ID and on the comparison between the face of the person detected in the first image and the face in the photograph.

2. The computer-implemented method of claim 1 further comprising:
   enabling or rejecting a transaction based on the age verification message, wherein the transaction is enabled if the person detected in the first image is determined to be the person on the ID and the stated age is higher than a verified threshold age.

3. The computer-implemented method of claims 1 or 2 wherein the age verification message is based on the estimated age, and the method further comprises:
   enabling a transaction if the estimated age is above the challenge threshold age.

4. The computer-implemented method of any preceding claim further comprising authenticating the ID, wherein authenticating the ID comprises:

   illuminating the ID with UV light,
   receiving an image of the illuminated ID, and
   determining if the illuminated ID comprises predetermined UV security features.

5. The computer-implemented method of any preceding claim wherein the regions of interest in the second image are determined using an ID processing neural network, wherein the ID processing neural network is configured to classify the ID as belonging to one of a plurality of predetermined ID types.

6. The computer-implemented method of any preceding claim wherein:

   the at least one additional image comprises a plurality of additional images of the person, and optionally, the method further comprises tracking the face of the person in each of the plurality of additional images.

7. The computer-implemented method of any preceding claim wherein determining if the person detected in the first image is the same as the person on the ID comprises:

   extracting first facial landmarks from the face in each additional image;
   extracting second facial landmarks from the photograph of the face in the second image; and
   comparing the first facial landmarks and the second facial landmarks to calculate a similarity score.

8. The computer-implemented method of claim 7 wherein the person on the photo ID is determined to be the person detected in the first image if the similarity score exceeds a predetermined similarity threshold.

9. The computer-implemented method of claims 7 or 8 wherein determining if the person detected in the first image is the same as the person on the ID comprises aligning the face in the at least one additional image and the face in the photograph to a standard reference frame.

10. The computer-implemented method of any preceding claim, further comprising:
    prior to receiving the receiving the at least one additional image, receiving an indication from a user interface indicating that the person detected in the first image has provided consent to temporarily store their image.

11. The computer-implemented method of any preceding claim further comprising: tracking the face of the person detected in the first image in subsequent images to determine that the face detected in the at least one additional image belongs to the person that was detected in the first image.

12. The computer-implemented method of any preceding claim further comprising:

> displaying images from a camera on a display screen, the images capturing a field of view of the camera;
> displaying a target area on the display screen for positioning the ID in the field of view;
> detecting when the ID is positioned within the target area; and
> providing an indication on the display screen when the ID is detected within the target area.

13. The computer-implemented method of any preceding claim further comprising using a face spoof detector to determine if the face in the first image is real or fake.

14. A computer-readable storage medium comprising instructions which when executed by a computer cause the computer to perform the computer-implemented method of any preceding claim.

15. An age verification system comprising:

> a camera;
> a computing device configured to receive images from the camera and output an age verification message, the computing device comprising:
>
> > a face detection module configured to receive a first image of a person and detect a face of the person in the first image;
> > an age estimation module configured to estimate an age of the person in the first image;
> > an ID processing module configured to, if the estimated age is above a challenge threshold age, request and receive a second image of an identification document (ID), wherein the ID is a photo ID including a photograph of a face, and determine regions of interest in the second image, the regions of interest comprising a first region containing date of birth information on the ID and a second region containing the photograph;

> a text recognition module configured to extract a date of birth from the first region of interest and calculate a stated age of the person on the ID from the date of birth; and
> a face comparison module configured to determine if the person detected in the first image is the same as the person on the ID by receiving at least one additional image of the person, detecting a face of the person in each additional image, and comparing the face detected in each additional image to the face in the photograph,

wherein the age verification message is based on the stated age of the person on the ID and on the comparison between the face of the person detected in each additional image and the face in the photograph.

16. The age verification system of claim 15 further comprising a display screen for displaying images from the camera, and a UV illuminator for authenticating the ID.

17. An automated transaction system comprising the age verification system of claim 15 or 16.

**Patentansprüche**

1. Computerimplementiertes Verfahren zur Überprüfung des Alters einer Person, wobei das Verfahren Folgendes umfasst:

> Empfangen eines ersten Bilds der Person,
> Detektieren des Gesichts der Person auf dem ersten Bild,
> Schätzen des Alters der Person auf dem ersten Bild und,
> wenn das geschätzte Alter unter einem Anforderungsschwellenwertalter liegt:
>
> > Anfordern und Empfangen eines zweiten Bilds eines Ausweisdokuments (ID), wobei das ID eine Fotografie eines Gesichts umfasst,
> > Bestimmen von Regionen von Interesse im zweiten Bild, wobei die Regionen von Interesse eine erste Region, welche Geburtsdatumsinformationen auf dem ID enthält, und eine zweite Region, welche die Fotografie enthält, umfassen;
> > Verwenden eines Texterkennungsmoduls, um ein Geburtsdatum aus der ersten Region von Interesse zu extrahieren, und Berechnen eines angegebenen Alters der Person auf dem ID anhand des Geburtsdatums;

Bestimmen, ob die auf dem ersten Bild detektierte Person dieselbe ist wie die Person auf dem ID durch Empfangen von zumindest einem zusätzlichen Bild der Person, Detektieren des Gesichts der Person auf jedem zusätzlichen Bild und Vergleichen des auf jedem zusätzlichen Bild detektierten Gesichts mit dem Gesicht auf der Fotografie; und

Ausgeben einer Altersüberprüfungsnachricht beruhend auf dem angegebenen Alter der Person auf dem ID und dem Vergleich zwischen dem auf dem ersten Bild detektierten Gesicht der Person und dem Gesicht auf der Fotografie.

2. Computerimplementiertes Verfahren nach Anspruch 1, ferner Folgendes umfassend:
Ermöglichen oder Ablehnen einer Transaktion beruhend auf der Altersüberprüfungsnachricht, wobei die Transaktion ermöglicht wird, wenn bestimmt wird, dass die auf dem ersten Bild detektierte Person die Person auf dem ID ist und das angegebene Alter höher ist als ein überprüftes Schwellenwertalter.

3. Computerimplementiertes Verfahren nach Anspruch 1 oder 2, wobei die Altersüberprüfungsnachricht auf dem geschätzten Alter beruht und das Verfahren ferner Folgendes umfasst:
Ermöglichen einer Transaktion, wenn das geschätzte Alter über dem Anforderungsschwellenwertalter liegt.

4. Computerimplementiertes Verfahren nach einem der vorangegangenen Ansprüche, ferner umfassend das Authentifizieren des ID, wobei das Authentifizieren des ID Folgendes umfasst:

Beleuchten des ID mit UV-Licht.
Empfangen eines Bildes des beleuchteten ID und
Bestimmen, ob das beleuchtete ID vorbestimmte UV-Sicherheitsmerkmale umfasst.

5. Computerimplementiertes Verfahren nach einem der vorangegangenen Ansprüche, wobei die Regionen von Interesse in dem zweiten Bild unter Verwendung eines neuronalen ID-Verarbeitungsnetzes bestimmt werden, wobei das neuronale ID-Verarbeitungsnetz konfiguriert ist, um das ID als einem aus einer Vielzahl von vorbestimmten ID-Typen zugehörig zu klassifizieren.

6. Computerimplementiertes Verfahren nach einem der vorangegangenen Ansprüche, wobei:

das zumindest eine zusätzliche Bild eine Vielzahl von zusätzlichen Bildern der Person umfasst und gegebenenfalls
das Verfahren ferner das Nachverfolgen des Gesichts der Person auf jedem aus der Vielzahl von zusätzlichen Bildern umfasst.

7. Computerimplementiertes Verfahren nach einem der vorangegangenen Ansprüche, wobei das Bestimmen, ob die auf dem ersten Bild detektierte Person dieselbe ist wie die Person auf dem ID, Folgendes umfasst:

Extrahieren von ersten Gesichtsmerkmalen aus dem Gesicht auf jedem zusätzlichen Bild;
Extrahieren von zweiten Gesichtsmerkmalen aus der Fotografie des Gesichts auf dem zweiten Bild; und
Vergleichen der ersten Gesichtsmerkmale und der zweiten Gesichtsmerkmale, um eine Ähnlichkeitszahl zu berechnen.

8. Computerimplementiertes Verfahren nach Anspruch 7, wobei bestimmt wird, dass die Person auf dem Foto-ID die auf dem ersten Bild detektierte Person ist, wenn die Ähnlichkeitszahl eine vorbestimmte Ähnlichkeitsschwellenwert übersteigt.

9. Computerimplementiertes Verfahren nach Anspruch 7 oder 8, wobei das Bestimmen, ob die auf dem ersten Bild detektierte Person dieselbe ist wie die Person auf dem ID, das Ausrichten des Gesichts auf dem zumindest einen zusätzlichen Bild und des Gesichts auf der Fotografie mit einem Standardreferenzrahmen umfasst.

10. Computerimplementiertes Verfahren nach einem der vorangegangenen Ansprüche, ferner Folgendes umfassend:
vor dem Empfangen des zumindest einen zusätzlichen Bilds Empfangen eines Hinweises von einer Benutzerschnittstelle, der angibt, dass die auf dem ersten Bild detektierte Person einem vorübergehenden Speichern ihres Bildes zugestimmt hat.

11. Computerimplementiertes Verfahren nach einem der vorangegangenen Ansprüche, ferner Folgendes umfassend: Nachverfolgen des Gesichts der auf dem ersten Bild detektierten Person auf darauffolgenden Bildern, um zu bestimmen, dass das auf dem zumindest einen zusätzlichen Bild detektierte Gesicht der Person gehört, die auf dem ersten Bild detektiert wurde.

12. Computerimplementiertes Verfahren nach einem der vorangegangenen Ansprüche, ferner Folgendes umfassend:

Anzeigen von Bildern von einer Kamera auf einem Anzeigenbildschirm, wobei die Bilder ein Gesichtsfeld der Kamera zeigen;

Anzeigen eines Zielbereichs auf dem Anzeigenbildschirm zum Positionieren des ID in dem Gesichtsfeld;

Detektieren, wenn das ID innerhalb des Zielbereichs positioniert wird; und

Bereitstellen eines Hinweises auf dem Anzeigenbildschirm, wenn das ID innerhalb des Zielbereichs positioniert wird.

13. Computerimplementiertes Verfahren nach einem der vorangegangenen Ansprüche, ferner Folgendes umfassend einen Gesichtsfälschungsdetektor, um zu bestimmen, ob das Gesicht auf dem ersten Bild echt oder gefälscht ist.

14. Computerlesbares Speichermedium, das Befehle umfasst, die, wenn sie von einem Computer ausgeführt werden, bewirken, dass der Computer das computerimplementierte Verfahren nach einem der vorangegangenen Ansprüche durchführen.

15. Altersüberprüfungssystem, umfassend:

eine Kamera;

eine Computervorrichtung, die konfiguriert ist, um Bilder von der Kamera zu empfangen und eine Altersüberprüfungsnachricht auszugeben, wobei die Computervorrichtung Folgendes umfasst:

ein Gesichtdetektionsmodul, das konfiguriert ist, um ein erstes Bild einer Person zu empfangen und das Gesicht der Person auf dem ersten Bild zu detektieren;

ein Altersschätzungsmodul, das konfiguriert ist, um das Alter der Person auf dem ersten Bild zu detektieren;

ein ID-Verarbeitungsmodul, das konfiguriert ist, um, wenn das geschätzte Alter über einem Anforderungsschwellenwertalter liegt, ein zweites Bild eines Ausweisdokuments (ID) anzufordern und zu empfangen, wobei das ID ein Foto-ID ist, welches eine Fotografie eines Gesichts umfasst, und Regionen von Interesse im zweiten Bild zu bestimmen, wobei die Regionen von Interesse eine erste Region, welche Geburtsdatumsinformationen auf dem ID enthält, und eine zweite Region, welche die Fotografie enthält, umfassen;

ein Texterkennungsmodul, das konfiguriert ist, um ein Geburtsdatum aus der ersten Region von Interesse zu extrahieren und ein angegebenes Alter der Person auf dem ID anhand des Geburtsdatums zu berechnen; und

ein Gesichtsvergleichsmodul, das konfiguriert ist, um zu bestimmen, ob die auf dem ersten Bild detektierte Person dieselbe ist wie die Person auf dem ID, durch Empfangen von zumindest einem zusätzlichen Bild der Person, Detektieren eines Gesichts der Person auf jedem zusätzlichen Bild und Vergleichen des auf jedem zusätzlichen Bild detektierten Gesichts mit dem Gesicht auf der Fotografie,

wobei die Altersüberprüfungsnachricht auf dem angegebenen Alter der Person auf dem ID und dem Vergleich zwischen dem auf dem auf jedem zusätzlichen Bild detektierten Gesicht der Person und dem Gesicht auf der Fotografie beruht.

16. Altersüberprüfungssystem nach Anspruch 15, ferner umfassend einen Anzeigenbildschirm zum Anzeigen von Bildern von der Kamera und eine UV-Beleuchtungseinheit zum Authentifizieren des ID.

17. Automatisches Transaktionssystem, umfassend ein Altersüberprüfungssystem nach Anspruch 15 oder 16.

**Revendications**

1. Procédé mis en œuvre par ordinateur de vérification de l'âge d'une personne, le procédé comprenant les étapes consistant à :

recevoir une première image de la personne, détecter le visage de la personne dans la première image,

estimer l'âge de la personne dans la première image, et

si l'âge estimé est inférieur à un âge de seuil d'autorisation :

demander et recevoir une seconde image d'une pièce d'identité (ID), dans lequel l'ID inclut une photographie d'un visage,

déterminer des régions d'intérêt dans la seconde image, les régions d'intérêt comprenant une première région contenant des informations de date de naissance sur l'ID et une seconde région contenant la photographie ;

utiliser un module de reconnaissance de texte pour extraire une date de naissance depuis la première région d'intérêt et calculer un âge déclaré de la personne sur l'ID à partir de la date de naissance ;

déterminer si la personne détectée dans la première image est la même que la personne sur l'ID en recevant au moins une image supplémentaire de la personne, en détectant un visage de la personne dans chaque image supplémentaire, et en comparant le visage détecté dans chaque image supplémentaire au visage sur la photographie ; et

délivrer en sortie un message de vérification d'âge sur la base de l'âge indiqué de la personne sur l'ID et de la comparaison entre le visage de la personne détecté sur la première image et le visage sur la photographie.

2. Procédé mis en œuvre par ordinateur selon la revendication 1, comprenant en outre l'étape consistant à :
activer ou rejeter une transaction sur la base du message de vérification d'âge, dans lequel la transaction est activée si la personne détectée dans la première image est déterminée comme étant la personne sur l'ID et si l'âge indiqué est supérieur à un âge de seuil vérifié.

3. Procédé mis en œuvre par ordinateur selon les revendications 1 ou 2, dans lequel le message de vérification d'âge est basé sur l'âge estimé, et le procédé comprend en outre l'étape consistant à :
activer une transaction si l'âge estimé est supérieur à l'âge de seuil d'autorisation.

4. Procédé mis en œuvre par ordinateur selon l'une quelconque des revendications précédentes, comprenant en outre l'authentification de l'ID, dans lequel l'authentification de l'ID comprend en outre les étapes consistant à :

éclairer l'ID avec de la lumière UV,
recevoir une image de l'ID éclairée, et
déterminer si l'ID éclairée comprend des caractéristiques de sécurité UV prédéterminées.

5. Procédé mis en œuvre par ordinateur selon l'une quelconque des revendications précédentes, dans lequel les régions d'intérêt dans la seconde image sont déterminées en utilisant un réseau neuronal de traitement d'ID, dans lequel le réseau neuronal de traitement d'ID est configuré pour classer l'ID comme appartenant à l'un d'une pluralité de types d'ID prédéterminés.

6. Procédé mis en œuvre par ordinateur selon l'une quelconque des revendications précédentes, dans lequel :

la au moins une image supplémentaire comprend une pluralité d'images supplémentaires de la personne, et
facultativement, le procédé comprend en outre le suivi du visage de la personne dans chacune de la pluralité d'images supplémentaires.

7. Procédé mis en œuvre par ordinateur selon l'une quelconque des revendications précédentes, dans lequel la détermination que la personne détectée dans la première image est ou non la même que la personne sur l'ID comprend les étapes consistant à :

extraire des premiers repères faciaux à partir du visage dans chaque image supplémentaire ;
extraire des seconds repères faciaux à partir de la photographie du visage dans la seconde image ; et
comparer les premiers repères faciaux et les seconds repères faciaux pour calculer un score de similitude.

8. Procédé mis en œuvre par ordinateur selon la revendication 7, dans lequel la personne sur l'ID à photographie est déterminée comme étant la personne détectée dans la première image si le score de similitude dépasse un seuil de similitude prédéterminé.

9. Procédé mis en œuvre par ordinateur selon les revendications 7 ou 8, dans lequel la détermination que la personne détectée dans la première image est ou non la même que la personne sur l'ID comprend l'alignement du visage dans la au moins une image supplémentaire et du visage dans la photographie sur un cadre de référence standard.

10. Procédé selon l'une quelconque des revendications précédentes, comprenant en outre l'étape consistant à :
avant de recevoir la au moins une image supplémentaire, recevoir une indication à partir d'une interface utilisateur indiquant que la personne détectée dans la première image a donné son consentement pour stocker temporairement son image.

11. Procédé mis en œuvre par ordinateur selon l'une quelconque des revendications précédentes, comprenant en outre l'étape consistant à :
suivre le visage de la personne détectée dans la première image dans des images suivantes pour déterminer que le visage détecté dans la au moins une image supplémentaire appartient à la personne qui a été détectée dans la première image.

12. Procédé mis en œuvre par ordinateur selon l'une quelconque des revendications précédentes, comprenant en outre les étapes consistant à :

afficher des images à partir d'une caméra sur un écran d'affichage, les images capturant un champ de vision de la caméra ;

afficher une zone cible sur l'écran d'affichage pour positionner l'ID dans le champ de vision ; détecter le moment où l'ID est positionné à l'intérieur de la zone cible ; et fournir une indication sur l'écran d'affichage lorsque l'ID est détecté dans la zone cible.

13. Procédé mis en œuvre par ordinateur selon l'une quelconque des revendications précédentes, comprenant en outre l'étape consistant à utiliser un détecteur d'usurpation de visage pour déterminer si le visage dans la première image est réel ou faux.

14. Support de stockage lisible par ordinateur comprenant des instructions qui, lorsqu'elles sont exécutées par un ordinateur, amènent ce dernier à mettre en œuvre le procédé mis en œuvre par ordinateur selon l'une quelconque précédentes revendications.

15. Système de vérification d'âge, comprenant :

une caméra ;
un dispositif informatique configuré pour recevoir des images de la caméra et délivrer en sortie un message de vérification d'âge, le dispositif informatique comprenant :

un module de détection de visage configuré pour recevoir une première image d'une personne et détecter le visage de la personne dans la première image ;
un module d'estimation d'âge configuré pour estimer un âge de la personne dans la première image ;
un module de traitement d'ID configuré pour, si l'âge estimé est supérieur à un âge de seuil d'autorisation, demander et recevoir une seconde image d'une pièce d'identité (ID), dans lequel l'ID est une ID à photographie incluant une photographie d'un visage, et déterminer des régions d'intérêt dans la seconde image, les régions d'intérêt comprenant une première région contenant des informations de date de naissance sur l'ID et une seconde région contenant la photographie ;
un module de reconnaissance de texte configuré pour extraire une date de naissance à partir de la première région d'intérêt et calculer un âge déclaré de la personne sur l'ID à partir de la date de naissance ; et
un module de comparaison de visage configuré pour déterminer si la personne détectée dans la première image est la même que la personne sur l'ID en recevant au moins une image supplémentaire de la personne, en détectant un visage de la personne dans chaque image supplémentaire, et en comparant le visage détecté dans chaque image supplémentaire au visage sur la photographie,

dans lequel le message de vérification d'âge est basé sur l'âge indiqué de la personne sur l'ID et sur la comparaison entre le visage de la personne détecté sur chaque image supplémentaire et le visage sur la photographie.

16. Système de vérification d'âge selon la revendication 15, comprenant en outre un écran d'affichage pour afficher des images provenant de la caméra, et un dispositif d'éclairage UV pour authentifier l'ID.

17. Système de transaction automatisé comprenant le système de vérification d'âge selon la revendication 15 ou 16.

Fig 1

S200: Estimate age

S202: Verify age with ID

S204: Authenticate the ID

Fig 2

Age verification system 100

Computing device 102

Face processing module 104

Face detection module 1040

Spoof detection module 1042

Age estimation module 1044

ID processing module 108

ID segmentation module 1080

Text recognition module 1082

Face comparison module 1084

ID authentication module 112

Camera 120

Display screen 130

UV illuminator 140

Fig 3

**S300:** Receive image of a scene

**S302:** Does the image contain a face?

No

Yes

**S304:** Does the face belong to a real person?

No

Yes

**S308:** Estimate age of face

**S310:** Is estimated age above first threshold age?

Yes

**S312:** Enable transaction

No

**S314:** Request ID

Fig 4

Fig 5

**S500:** Illuminate ID with UV light

**S502:** Receive image of illuminated ID

**S504:** Are predetermined security features present in the illuminated ID?

**S508:** Accept ID as valid

**S506:** Reject ID as invalid

# Fig 6

**S600**: Wait for face

**S602**: Face detected

**S604**: Valid face?

No

Yes

**S606**: Process and landmark face

**S608**: Pass landmarks to Age models

**S610**: Determine initial age

**S612**: Is outside 1$^{st}$ pass thresholds

Yes

No

**S614**: Determine demographic

**S622**: Return initial age

**S616**: Determine age bin

Loop until no more refinement is required

**S618**: Return refined age

**S620**: Return final age

No

Fig. 7

Underage Person Detected

Would you like to perform an automated ID Check?

Accept    Deny

Fig. 8

Fig. 9

**REFERENCES CITED IN THE DESCRIPTION**

**Patent documents cited in the description**

- CN 104680131 B
- EP 3869395 A1